# EUROPEAN PATENT SPECIFICATION

(11) **EP 4 124 549 B1**
(45) Date of publication and mention of the grant of the patent: **12.03.2025**
(21) Application number: 22187469.6
(22) Date of filing: 28.07.2022
(51) Int. Cl.: B62J 9/26

(54) **ATTACHABLE BAG FOR BICYCLE**
BEFESTIGBARE FAHRRADTASCHE
SAC POUVANT ÊTRE FIXÉ POUR BICYCLETTE

(30) Priority: 30.07.2021 IT 202100020498
(43) Date of publication of application: 01.02.2023
(73) Proprietor: Cantafora, Alfonso Michelangelo Gerolamo, 20122 Milano (MI) (IT)
(72) Inventor: Cantafora, Alfonso Michelangelo Gerolamo, 20122 Milano (MI) (IT)
(74) Representative: Dragotti & Associati S.R.L.

(56) References cited:
- WO-A1-2010/111829
- DE-U1- 202012 011 205
- GB-A- 2 419 633
- US-A- 5 127 563
- US-A- 5 190 345
- US-A- 5 496 089

## Description

The present invention relates to an innovative bag which can be attached to a bicycle by means of removable slide-type coupling system.

The problem of providing bags which may be easily attached to various types of bicycle is known. Usually it is preferred to provide a luggage or bag carrier rack which is fixed above the rear wheel using fastening systems situated close to or on the wheel hub and on the seat post and to which a bag is attached on top or on the side. This arrangement may be useful for some types of town bikes, but is awkward, if not unusable, on other types of bicycle.

Moreover, even when the bag is removed, the luggage or bag carrier rack forms a bulky object on the bicycle.

In alternative designs, bags are provided such that they can be attached by means of a plurality of straps onto the crossbar of the frame between the handlebars and saddle or can be attached to the handlebars. These arrangements are possible only with very small sized bags and fixing and removing them is any case a relatively difficult and awkward operation.

WO2010/111829 discloses saddle-bag having a Velcro strap around the saddle posts and a clamp to grip the frame of the saddle, according to the features of the preamble of claim 1.

The general object of the present invention is to provide a bag for a bicycle with a rapid attachment system which occupies little space and is suitable for various types of bicycle.

In view of the above object the idea which has occurred is to provide, according to the invention, a bag for a bicycle as claimed in claim 1.

In order to illustrate more clearly the innovative principles of the present invention and its advantages compared to the prior art, an example of embodiment applying these principles will be described below with the aid of the accompanying drawings. In the drawings:
- Figure 1 shows a schematic side view of a bag applying the principles of the invention, attached to a bicycle;
- Figures 2 and 3 show a schematic top plan and perspective view, respectively, of a removable part of the bag according to Figure 1;
- Figure 4 shows an enlarged and perspective view of a coupling part of the bag according to Figure 1, intended to be fixed to the bicycle;
- Figure 5 shows an enlarged and exploded view of the coupling part of the bag according to Figure 4 and a matching coupling part fixed to the bag;
- Figure 6 shows an enlarged and perspective view of a front part of the bag according to Figure 1;
- Figure 7 shows an enlarged and perspective view of a possible embodiment of an element for fastening the bag according to Figure 1.

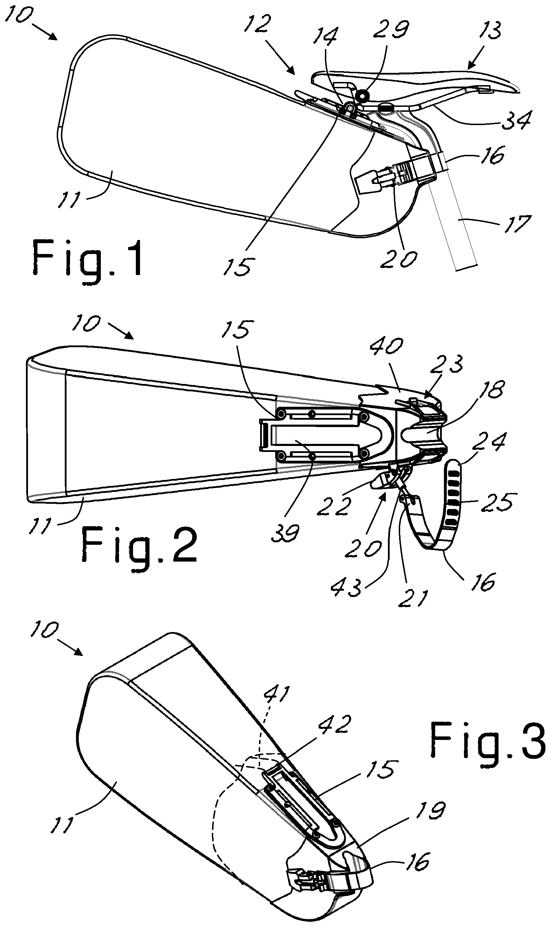

With reference to the Figures, Figure 1 shows a bag - indicated overall by 10 - designed in accordance with the invention.

The bag 10 comprises a container 1 and a coupling system 12. The coupling system 12 is intended to attach the bag close to the rear part of a saddle 13 of a bicycle (not shown, which may be of any desired type, i.e. town bike, racing bike or also "pedelec").

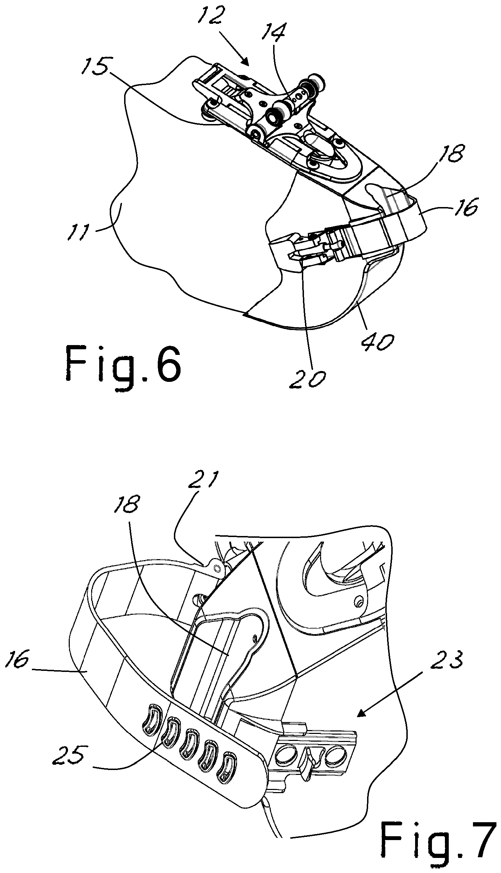

As can be clearly seen also in Figure 6, the coupling system 12 comprises a first coupling part or support 14 and a second coupling part 15. The first coupling part 14 is intended to be stably fastened to the bicycle saddle, while the second coupling part 15 is fixed in the upper zone close to the front end of the container 11. The two coupling parts 14 and 15 are designed to be easily coupled together in order to fix the bag to the saddle.

The front end of the container 11 is also provided with a fixing belt 16 intended to be arranged around the seat post 17 which supports the saddle as can be clearly seen in Figures 1 and 2.

As can also be clearly seen in Figures 2 and 3, for more stable fastening to the seat post 17, a seat for mounting the bag on the seat post may also be advantageously provided, said seat being realized in the form of a vertical groove or seat 18 inside a rigid element 19 which is present on the front end of the container. The belt 16 will be advantageously arranged in front of the groove 18, as is clearly visible in Figure 3, in order to retain the post inside the seat 18.

Advantageously, the fixing belt 18 may have an adjustment and tightening system 20. The adjustment and tightening system 20 may comprise, for example, at one end 21 of the belt 16 on one side of the bag, a per se known adjustment system with a toggle lever 22 for tensioning the belt (for example including also a possible rotating micrometric screw and female thread adjustment system, as can be clearly seen in Figure 2, indicated by 43), and, on the other side of the bag, a per se known hook-type fastener 23 for the other end 24 of the belt, which can be releasably operated so as to free the end 24 and allow frontal insertion or extraction of the seat post 17 into/from the seat 18. As shown in the figures, the toggle lever 22 has preferably one end (preferably the front end) which is pivotably mounted on the support and the other end which is manually operated in order to rotate the lever so as to tension the belt, said belt being connected to the lever in an intermediate position between the two ends of the lever.

The belt 16 may have the end 24 which is suitably shaped with a plurality of slots 25 arranged spaced along the length of the belt so as to engage with the hook 23 in a plurality of positions. This allows the length of the belt to be adapted to seat posts 17 with different diameters. The micrometric adjustment system 43, where present, is able to allow prior adjustment of the fastening so that there is minimum play on the seat post when the toggle lever is tightened.

As can be seen again in Figure 2, the end 21 of the belt may be fixed to the toggle lever by means of a short tie-piece (which may comprise a micrometric adjustment system 43 as mentioned above) which allows a degree of rotational freedom of the belt so that, by rotating the belt backwards, the bag can be seated more easily on the upper slide system until the end-of-travel position is reached where the seat 18 makes contact with the seat post.

Systems for adjusting a belt are in any case well-known (for example, as in the case of ski boots) and therefore will not be further illustrated or described in detail, the person skilled in the art being able to understand easily the operation and structure based on the description thereof provided here.

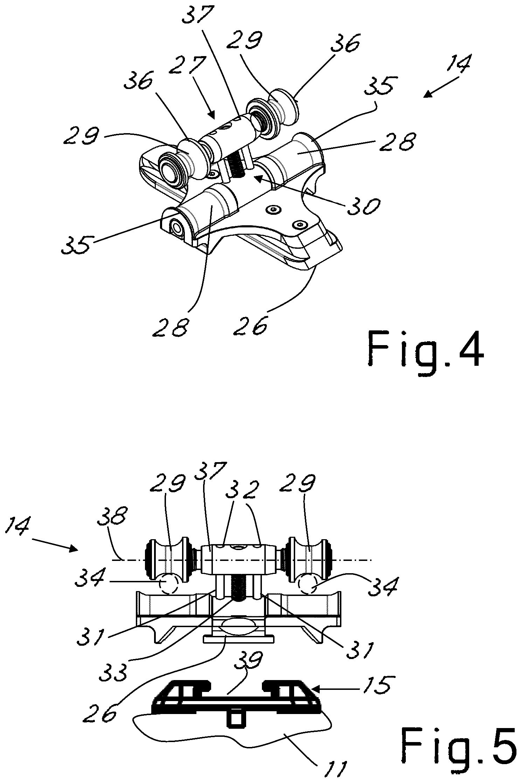

Figures 4 and 5 show in greater detail a possible embodiment of the coupling part 14. This coupling part 14 comprises at the bottom a slide 26 (for example with a cross-section in the form of an overturned T) and at the top a clamp system 27. The clamp system 27 is intended to grip the frame of the bicycle saddle so that the slide 26 remains firmly in position underneath the saddle.

For this purpose, the clamp system may comprise first jaws 28 and second jaws 29. Advantageously, the first jaws 28 are fixed onto the body of the coupling part 14, while the second jaws 29 are movably mounted on a body 37 so that they can be moved towards the first jaws 28 by means of an adjustment mechanism 30, for example of the screw type.

The adjustment mechanism 30 may comprise for example guides 31 for sliding the second jaws 29 (for example with the guides 31 which slide inside passages 32 in the body 37) so as to move them towards or away from the first jaws 29 by means of an operating screw 33. The operating screw may advantageously have an operating head which emerges from the bottom side of the slide 26 and may be screwed with its threaded shank into the body 37 between the movable jaws 29.

As can be also seen in Figure 5, the first jaws 28 and the second jaws 29 are advantageously formed by pairs of first and second jaws, each pair of first and second jaws being intended to clamp a rigid rod-shaped element 34 of the frame part of the saddle. These rod-shaped elements are usually present underneath the saddle and extend longitudinally with respect to the length of the saddle itself so as to connect the top part of the saddle with the seat post supporting the saddle. Preferably, one or both the fixed and movable jaws consist of cylindrical or semi-cylindrical elements which are arranged with their axis transverse to the saddle.

The movable jaws 29 preferably project on both sides of the body 37 so as to have opposite free ends. The movable jaws 29 with the body 37 and the adjustment mechanism 30 may advantageously form a T.

This facilitates the insertion and stable fixing of the first coupling part 14 underneath the saddle.

For firm gripping, the fixed jaws 28 and/or movable jaws 29 may also have raised lateral shoulders 35, 36. Each movable jaw 29 may also be realized in the form of a reel. Each movable jaw 29 may also be made so as to be freely rotatable about its axis 38 transverse to the saddle.

Advantageously, the fixed jaws 28 may have a length, transverse to the saddle, greater than that of the movable jaws 29 and the movable jaws 29 may be adjustable positionwise along their axis 38 on the body 37 so as to be adaptable to different interaxial distances between the rod-shaped elements 34. For example, the movable jaws 29 may be hollow and internally threaded so that they can screwed along their axis 38 onto the body 37 so that an axial rotation thereof allows them to be displaced axially towards or away from each other, as is clear for example from Figure 5.

The second coupling part 15, which is present on top of and towards the front of the container 11 of the bag, in turn comprises a seat 39 for slidable engagement of the slide 26. As can be clearly seen for example in Figure 5, the seat 39 has a cross-section which substantially matches the cross-section of the slide 26, with two lateral recesses for receiving the lateral flanges of the slide 26.

The bag may be mounted on the coupling part 14 by simply sliding the seat 39 onto the slide 26 until they are fully coupled together, as is clear for example from Figure 6.

The container 11 may also be made rigid (for example of rigid plastic) or also be made of relatively flexible and impermeable external material (for example nylon fabric) and if necessary have a partially or totally stiffened internal structure.

The bag may also comprise a rigid shell 40 on the front end of the container 11. The rigid shell 40 may stably support the coupling part 15, the belt 16 with its fastening mechanism 20, 23 and the mounting seat 18 if present. This may be particularly useful in the case of an at least partially flexible container.

The container 11 may be made so as to be foldable in order to reduce its overall volume when it is not in use or when it is not completely full. Figure 3 schematically shows in broken lines a possible folded-up position of the container 11, with a possible belt 41 which is able to keep the container in said folded-up condition by means of engagement with a rear end 42 of the coupling part 15.

During use of the bag according to the invention, it is possible to mount the coupling part 14 on the saddle of the bicycle. In order to mount the coupling part 14 underneath the saddle, it is sufficient to insert the rod-shaped elements of the saddle frame between the fixed jaws and movable jaws and operate the operating screw 33 (for example using a screwdriver or an Allen key) until the rod-shaped elements 34 are firmly clamped between the jaws, as is visible for example in Figure 1, so that the coupling part 14 remains firmly secured underneath the saddle with the slide 26 directed downwards and towards the rear of the bicycle.

The coupling part 15 of the bag may then be inserted inside the slide 26 and the front belt 16 fastened to the seat post 17 of the bicycle, tightening it with the adjustment and tightening system 20, where present, so that the bag is arranged as shown in Figure 1.

In order to remove the bag from the coupling part 14, it is sufficient to loosen the belt 16 and extract the bag from the slide 26, which remains on the bicycle.

Figure 7 shows in greater detail a possible embodiment of the fastening system realized with the hook 23 and the slots 25 in the belt 16. In this figure it can also be seen how the seat 18 may for example have a rubber covering useful for increasing the adhesion of the shell/belt system to the seat posts and also for preventing possible damage to the surface of more delicate seat posts, such as carbon seat posts.

As can be clearly seen in Figure 7, the hook 23 may be made from a sheared and folded metal strip and may advantageously extend in a manner slightly curved backwards (to the right in Figure 7) with respect to the direction of arrival of the belt and also be curved transversely so as to have a frontal concavity (towards the left in Figure 7). As shown again in Figure 7, the slots 25 for adjusting the fastening position of the belt may be in this case advantageously curved with a convexity towards the free end of the belt so as to match the hook 23 which engages inside them. This allows an even easier and stronger fastening and release action.

At this point it is clear how the predefined objects have been achieved. A bag as described may be easily installed, the bag may be easily attached and released from the bicycle and it does not occupy completely the rear part of the bicycle with bulky fixed structures such as the luggage or bag carrier racks of the prior art. When the container part of the bag is released and removed from bicycles, the coupling part 14 which remains on the bicycle occupies a minimum amount of space and has a minimum weight.

The belt system described, preferably provided on one side with a toggle lever and on the other side with a hook fastener results in a system which is both practical and at the same time projects only by a small amount transversely with respect to the bicycle and is set back sufficiently to reduce to a minimum the risk of contact with the cyclist's thighs during the pedalling action.

Furthermore, fixing the bag to the bicycle is extremely practical since it is possible to insert the slide 15 and then fix and tension the belt using only one hand simply and quickly. Moreover, by rotating the toggle lever into the open position, the belt is released easily and in a substantially automatic manner from the hook on the opposite side, without the need to operate release systems for opening the belt around the seat post. With a hook which is only slightly curved (and preferably also with a transverse curvature) and pre-shaped curved belt with a suitable rigidity, release is performed even more easily.

With easy release of the belt it is then simple to extract the bag support slide 15, moving the bag backwards using also the same hand which released the belt.

The possibility of being able to perform an operating, fastening or release action using only one hand is particularly useful when, with the other hand, it is required to keep the bicycle upright.

The possible micrometric system on the lever also allows the belt to be properly tensioned, even in the case of slots 25 with spacing from each other which does not correspond exactly to the diameter of a particular seat post.

The belt may have a pre-shaped curved form, with a suitable elasticity, so as to adapt with a good degree of tolerance to all the types of commercially available seat posts with a circular cross-section.

Obviously, the above description of an embodiment applying the innovative principles of the present invention is provided by way of example of these innovative principles. The scope of the rights claimed hererin in limited by the appended set of claims.

For example, the form of the containing part of the bag may be different from that shown and may comprise different known closing systems, such as zip fasteners, Velcro strips, automatic buttons, etc. The system for fastening and adjusting the belt 16 may be different from those shown, or the same fastening may be present on both sides, or one of the systems described here may be present on one side, while on the other side there may be another known system, such as a known monodirectional, releasable spring, sliding engagement system.

## Claims

1. Bag (10) for bicycle, comprising a container (11) and a coupling system (12) which is intended to attach the container (11) to a bicycle, the coupling system (12) comprising a first coupling part (14) intended to be fixed to the bicycle and a second coupling part (15) fixed onto the container (11), the first coupling part (14) and the second coupling part (15) being mutually slidably engageable with each other, the first coupling part (14) comprises a clamp system (27), intended to fix it to a frame part of a bicycle saddle, and a slide (26) matching a seat (39) present on the second coupling part (15) so as to be slidably received inside said seat (39), the second coupling part (15) being in an upper position and close to a front part (40) of the container and on this front part (40) of the container there also being present a belt (16) intended to lock the seat post of a bicycle against this front part when the first coupling part (14) is fixed to the frame part of the saddle and the slide (26) is received inside the seat (39), the clamp system (27) comprising first jaws (28) and second jaws (29), the first jaws (28) being fixed on the first coupling part (14), while the second jaws (29) are movably mounted on a body (37) so that they can be moved towards the first jaws (28) by means of an adjustment mechanism (30), **characterized in that** the first jaws (28) have a transverse length greater than that of the second jaws (29) and the second jaws (29) are adjustable positionwise on the body (37) so as to move away or towards each other in order to adapt to different distances between rod-shaped elements (34).

2. Bag (10) according to claim 1, **characterized in that** the adjustment mechanism (30) comprises guides (31) for sliding the second jaws (29) so as to move them towards or away from the first jaws (28) by means of an operating screw (33).

3. Bag (10) according to claim 1, **characterized in that** the first jaws (28) and the second jaws (29) are formed by pairs of first and second jaws, each pair of first and second jaws being designed to clamp a rod-shaped element (34) of a frame part of the saddle.

4. Bag (10) according to claim 1, **characterized in that** one or both of the first and/or the second jaws consist of cylindrical or semi-cylindrical elements.

5. Bag (10) according to claim 1, **characterized in that** the second jaws (29) protrude on both sides of the body (37) so as to have free opposite ends and, preferably, form a T with the adjustment mechanism (30).

6. Bag (10) according to claim 1, **characterized in that** the first jaws (28) and/or the second jaws (29) have raised lateral shoulders (35, 36).

7. Bag (10) according to claim 1, **characterized in that** the second jaws (29) have the shape of a reel.

8. Bag (10) according to claim 1, **characterized in that** the front part (40) comprises a vertical groove (18) which is intended to at least partially accommodate the seat post when the first coupling part (14) is fixed to the frame part of the saddle and the slide (26) is received inside the seat (39).

9. Bag (10) according to claim 1, **characterized in that** the front part (40) comprises a rigid shell.

10. Bag (10) according to claim 1, **characterized in that** the belt (16) has one end which is fixed on one side of the container (11) and the other end (24) which can be fastened to the other side of the container.

11. Bag (10) according to claim 1, **characterized in that** one end of the belt is fixed on one side of the container (11) by means of a toggle lever tightening system (20).

12. Bag (10) according to claim 1, **characterized in that** one end of the belt can be fastened onto one side of the container (11) by means of a hook (23) fixed to the container, the belt (16) having a plurality of slots (25) along its length for adjustable fastening together with the hook (23).

13. Bag (10) according to claim 9, **characterized in that** the container is made of material which is at least partially flexible and foldable towards the rigid shell (40).

## Patentansprüche

1. Tasche (10) für Fahrrad, umfassend einen Behälter (11) und ein Kupplungssystem (12), das dazu bestimmt ist, den Behälter (11) an einem Fahrrad zu befestigen, das Kupplungssystem (12) ein erstes Kupplungsteil (14), das dazu bestimmt ist, am Fahrrad befestigt zu werden, und ein zweites Kupplungsteil (15) umfasst, das am Behälter (11) befestigt ist, das erste Kupplungsteil (14) und das zweite Kupplungsteil (15) gleitend miteinander in Eingriff gebracht werden können, das erste Kupplungsteil (14) ein Klemmsystem (27) umfasst, das dazu bestimmt ist, es an einem Rahmenteil eines Fahrradsattels zu befestigen, und eine Gleitschiene (26), die zu einem Sitz (39) passt, der auf dem zweiten Kupplungsteil (15) vorhanden ist, sodass er gleitend im Inneren des Sitzes (39) empfangen wird, der zweite Kupplungsteil (15) sich in einer oberen Position und in der Nähe eines vorderen Teils (40) des Behälters befindet und auf diesem vorderen Teil (40) des Behälters auch einen Riemen (16) aufweist, der dazu bestimmt ist, den Sitzpfosten eines Fahrrads gegen diesen vorderen Teil zu verriegeln, wenn der erste Kupplungsteil (14) an dem Rahmenteil des Sattels befestigt ist und die Gleitschiene (26) im Inneren des Sitzes (39) empfangen wird, das Klemmsystem (27) erste Klemmbacken (28) und zweite Klemmbacken (29) umfasst, wobei die ersten Klemmbacken (28) an dem ersten Kupplungsteil (14) befestigt sind, während die zweiten Klemmbacken (29) beweglich an einem Körper (37) befestigt sind, sodass sie mittels eines Einstellmechanismus (30) zu den ersten Klemmbacken (28) hin bewegt werden können, **dadurch gekennzeichnet, dass** die ersten Klemmbacken (28) eine größere Querlänge als die zweiten Klemmbacken (29) aufweisen und die zweiten Klemmbacken (29) in ihrer Position auf dem Körper (37) verstellbar sind, sodass sie sich voneinander weg oder aufeinander zu bewegen, um sich an unterschiedliche Abstände zwischen stabförmigen Elementen (34) anzupassen.

2. Tasche (10) nach Anspruch 1, **dadurch gekennzeichnet, dass** der Einstellmechanismus (30) Gleitschienen (31) umfasst, um die zweiten Backen (29) mittels einer Stellschraube (33) zu den ersten Backen (28) hin oder von ihnen weg zu verschieben.

3. Tasche (10) nach Anspruch 1, **dadurch gekennzeichnet, dass** die ersten Backen (28) und die zweiten Backen (29) durccaare von ersten und zweiten Backen gebildet sind, wobei jedes Paar von ersten und zweiten Backen dazu vorgesehen ist, ein stabförmiges Element (34) eines Rahmenteils des Sattels zu klemmen.

4. Tasche (10) nach Anspruch 1, **dadurch gekennzeichnet, dass** eine oder beide der ersten und/oder zweiten Backen aus zylindrischen oder halbzylindrischen Elementen bestehen.

5. Tasche (10) nach Anspruch 1, **dadurch gekennzeichnet, dass** die zweiten Backen (29) beidseitig des Körpers (37) freie gegenüberliegende Enden aufweisen und vorzugsweise mit dem Einstellmechanismus (30) ein T bilden.

6. Tasche (10) nach Anspruch 1, **dadurch gekennzeichnet, dass** die ersten Backen (28) und/oder die zweiten Backen (29) erhöhte seitliche Schultern (35, 36) aufweisen.

7. Tasche (10) nach Anspruch 1, **dadurch gekennzeichnet, dass** die zweiten Backen (29) die Form einer Rolle aufweisen.

8. Tasche (10) nach Anspruch 1, **dadurch gekennzeichnet, dass** der vordere Teil (40) eine vertikale Nut (18) umfasst, die dazu bestimmt ist, den Sitzpfosten mindestens teilweise zu empfangen, wenn der erste Kupplungsteil (14) an dem Rahmenteil des Sattels befestigt ist und die Gleitschiene (26) im Inneren des Sitzes (39) empfangen wird.

9. Tasche (10) nach Anspruch 1, **dadurch gekennzeichnet, dass** das Vorderteil (40) eine starre Schale umfasst.

10. Tasche (10) nach Anspruch 1, **dadurch gekennzeichnet, dass** der Riemen (16) ein Ende aufweist, das an einer Seite des Behälters (11) befestigt ist, und das andere Ende (24), das an der anderen Seite des Behälters befestigt werden kann.

11. Tasche (10) nach Anspruch 1, **dadurch gekennzeichnet, dass** ein Ende des Riemens auf einer Seite des Behälters (11) mittels eines Kniehebelspannsystems (20) befestigt ist.

12. Tasche (10) nach Anspruch 1, **dadurch gekennzeichnet, dass** ein Ende des Riemens an einer Seite des Behälters (11) mittels eines am Behälter befestigten Hakens (23) befestigt werden kann, wobei der Riemen (16) eine Vielzahl von Schlitzen (25) entlang seiner Länge zur einstellbaren Befestigung zusammen mit dem Haken (23) aufweist.

13. Tasche (10) nach Anspruch 9, **dadurch gekennzeichnet, dass** der Behälter aus einem Material besteht, das mindestens teilweise flexibel und gegen die starre Schale (40) faltbar ist.

## Revendications

1. Sacoche (10) pour bicyclette, comprenant un contenant (11) et un système d'accouplement (12) qui est destiné à attacher le contenant (11) à une bicyclette, le système d'accouplement (12) comprenant une première partie d'accouplement (14) destinée à être fixée à la bicyclette et une seconde partie d'accouplement (15) fixée sur le contenant (11), la première partie d'accouplement (14) et la seconde partie d'accouplement (15) pouvant être mutuellement mise en prise coulissante l'une avec l'autre, la première partie d'accouplement (14) comprend un système de serrage (27), destiné à la fixer à une partie de cadre d'une selle de bicyclette, et une glissière (26) correspondant à un siège (39) présent sur la seconde partie d'accouplement (15) de manière à être reçue de manière coulissante à l'intérieur dudit siège (39), la seconde partie d'accouplement (15) étant dans une position supérieure et proche d'une partie avant (40) du contenant et sur cette partie avant (40) du contenant est également présente une ceinture (16) destinée à bloquer la tige de siège d'une bicyclette contre cette partie avant lorsque la première partie d'accouplement est enclenchée (14) est fixée à la partie de cadre de la selle et la glissière (26) est reçue à l'intérieur du siège (39), le système de serrage (27) comprenant des premières mâchoires (28) et des secondes mâchoires (29), les premières mâchoires (28) étant fixées sur la première partie d'accouplement (14), tandis que les secondes mâchoires (29) sont montées de manière mobile sur un corps (37) de manière à pouvoir être déplacées vers les premières mâchoires (28) au moyen d'un mécanisme de réglage (30), **caractérisée en ce que** les premières mâchoires (28) ont une longueur transversale supérieure à celle des secondes mâchoires (29) et les secondes mâchoires (29) sont réglables en position sur le corps (37) de manière à s'éloigner ou à se rapprocher l'une de l'autre afin de s'adapter à différentes distances entre des éléments en forme de tige (34).

2. Sacoche (10) selon la revendication 1, **caractérisée en ce que** le mécanisme de réglage (30) comprend des guides (31) permettant de faire coulisser les secondes mâchoires (29) de manière à les rapprocher ou à les éloigner des premières mâchoires (28) au moyen d'une vis de manœuvre (33).

3. Sacoche (10) selon la revendication 1, **caractérisée en ce que** les premières mâchoires (28) et les secondes mâchoires (29) sont formées par des paires de premières et secondes mâchoires, chaque paire de premières et secondes mâchoires étant conçue pour serrer un élément en forme de tige (34) d'une partie de cadre de la selle.

4. Sacoche (10) selon la revendication 1, **caractérisée en ce que** l'une ou les deux premières et/ou secondes mâchoires sont constituées d'éléments cylindriques ou semi-cylindriques.

5. Sacoche (10) selon la revendication 1, **caractérisée en ce que** les secondes mâchoires (29) font saillie de part et d'autre du corps (37) de manière à avoir des extrémités opposées libres et, de préférence, forment un T avec le mécanisme de réglage (30).

6. Sacoche (10) selon la revendication 1, **caractérisée en ce que** les premières mâchoires (28) et/ou les secondes mâchoires (29) présentent des épaulements latéraux surélevés (35, 36).

7. Sacoche (10) selon la revendication 1, **caractérisée en ce que** les secondes mâchoires (29) ont la forme d'une bobine.

8. Sacoche (10) selon la revendication 1, **caractérisée en ce que** la partie avant (40) comprend une rainure verticale (18) qui est destinée à loger au moins partiellement la tige de siège lorsque la première pièce d'accouplement (14) est fixée à la partie de cadre de la selle et la glissière (26) est reçue à l'intérieur du siège (39).

9. Sacoche (10) selon la revendication 1, **caractérisée en ce que** la partie avant (40) comprend une coque rigide.

10. Sacoche (10) selon la revendication 1, **caractérisée en ce que** la ceinture (16) présente une extrémité qui est fixée sur un côté du contenant (11) et l'autre extrémité (24) qui peut être fixée sur l'autre côté du contenant.

11. Sacoche (10) selon la revendication 1, **caractérisée en ce qu'**une extrémité de la ceinture est fixée sur un côté du contenant (11) au moyen d'un système de serrage à genouillère (20).

12. Sacoche (10) selon la revendication 1, **caractérisée en ce qu'**une extrémité de la ceinture peut être fixée sur un côté du contenant (11) au moyen d'un crochet (23) fixé au contenant, la ceinture (16) présentant sur sa longueur une pluralité de fentes (25) pour une fixation réglable conjointement avec le crochet (23).

13. Sacoche (10) selon la revendication 9, **caractérisée en ce que** le contenant est réalisé en matériau au moins partiellement souple et pliable vers la coque rigide (40).
